# FASCICULE DE BREVET EUROPEEN

(11) **EP 3 377 340 B1**
(45) Date de publication et mention de la délivrance du brevet: **01.07.2020**
(21) Numéro de dépôt: 16809985.1
(22) Date de dépôt: 14.11.2016
(51) Int. Cl.: B60C 11/03, B60C 11/13

(54) **PNEUMATIQUE COMPORTANT UN BLOC AVEC UNE PAROI LATERALE INCLINEE**
REIFEN MIT EINEM BLOCK MIT EINER GENEIGTEN SEITENWAND
TIRE COMPRISING A BLOCK WITH A TILTED SIDE WALL

(30) Priorité: 16.11.2015 FR 1560941
(43) Date de publication de la demande: 26.09.2018
(73) Titulaire: Compagnie Générale des Etablissements Michelin, 63000 Clermont-Ferrand (FR)
(72) Inventeur: FABING, Daniel, 63040 Clermont-Ferrand Cedex 9 (FR); BATNINI, Illyes, 63040 Clermont-Ferrand Cedex 9 (FR); DUCHEMIN, Sébastien, 63040 Clermont-Ferrand Cedex 9 (FR); BUSA, Jeoffrey, 63040 Clermont-Ferrand Cedex 9 (FR)
(74) Mandataire: Demaure, Pierre-Yves
(86) Numéro de dépôt international: PCT/FR2016/052939
(87) Numéro de publication internationale: WO 2017/085385

(56) Documents cités:
- EP-A1- 0 903 249
- EP-A1- 2 769 853
- EP-A1- 2 815 898
- WO-A1-2011/098401
- WO-A1-2015/015525
- JP-A- H09 109 617

## Description

### DOMAINE DE L'INVENTION

La présente invention concerne un pneumatique pour véhicule automobile comportant une bande de roulement comprenant au moins un bloc, ce bloc ayant au moins une paroi latérale inclinée.

### ETAT DE LA TECHNIQUE

Le document US4884607 divulgue un pneumatique comportant une bande de roulement, cette bande de roulement étant pourvue d'une pluralité de blocs de gomme. Les blocs de gomme sont organisés dans la bande de roulement de sorte que cette bande de roulement est dite directionnelle. Les blocs de gomme sont également organisés pour former, dans la bande de roulement, des rainures circonférentielles et des rainures globalement transversales. Les rainures transversales ont notamment pour rôle d'évacuer l'eau hors de la bande de roulement lorsque le pneumatique roule sur une chaussée humide. Pour améliorer cette évacuation de l'eau, il est précisé dans le document US4884607, que les sections des rainures transversales s'élargissent en direction des bords de la bande de roulement. Cet élargissement est notamment rendu possible par l'inclinaison des parois latérales des blocs délimitant les rainures (voir fig.2A, fig.2B, fig.2C du document US4884607). En effet, pour une rainure transversale donnée, chaque paroi latérale de blocs délimitant cette rainure possède un angle d'inclinaison propre. L'inclinaison des parois latérales des blocs diminue plus on s'éloigne du centre de la bande de roulement de sorte à augmenter les sections des rainures transversales. Le document WO2011/098401 divulgue également des blocs présentant des parois inclinés. Les documents WO2015015525, EP0903249, et JPH09109617 présentent des pneumatiques agricoles. Le document EP2769853 divulgue une bande de roulement pour un véhicule à 4 roues motrices.

Or, il apparaît qu'un tel agencement de blocs de gomme, possédant des angles d'inclinaison différents en fonction de la distance par rapport au centre de la bande de roulement, contribue à l'émergence d'un profil d'usure non uniforme sur cette bande de roulement au cours des roulages. Notamment, il a été constaté que l'usure des blocs à proximité des zones de bord de la bande de roulement est plus importante notamment lorsque le pneumatique est monté sur un essieu directionnel. De la même manière, il a été constaté que l'usure des blocs à proximité du centre de la bande de roulement est plus importante notamment lorsque le pneumatique est monté sur un essieu moteur.

Il existe donc un besoin d'améliorer le profil d'usure d'une bande de roulement d'un pneumatique, tout en maintenant une bonne capacité d'adhérence de cette bande sur une chaussée humide.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « bord » de la bande de roulement, on entend l'une des surfaces latérales délimitant la bande de roulement.

Par « largeur W de la bande de roulement », on entend la distance séparant les deux bords encadrant la bande de roulement. Cette distance est définie par la norme ETRTO. Elle est ainsi égale à +/- 10% d'une largeur nominale Wnom avec Wnom égale à (1.075-0.005ar)^{∗}S^{1.001} où ar est le rapport nominal d'aspect exprimé en base 100 et s est la grosseur du boudin théorique sur la jante de mesure exprimée en mm.

Par « bloc d'une bande de roulement, on entend un élément en relief délimité par des creux ou des rainures et comprenant des parois latérales et une face de contact, cette dernière étant destinée à venir en contact avec une chaussée pendant le roulage.

Par « sculpture directionnelle », on entend une sculpture de bande de roulement dont les blocs sont spécifiquement agencés pour optimiser les caractéristiques comportementales en fonction d'un sens de rotation prédéterminé. Ce sens de rotation est classiquement indiqué par une flèche sur le flanc du pneumatique. Dans une telle architecture, les arêtes des blocs qui sont dans le sens de la direction de roulage sont désignées par le terme « arêtes d'attaque », tandis que les arêtes des blocs qui sont opposées à la direction de roulage sont désignées par le terme « arêtes de fuite ».

Par « évolution continue » de l'angle d'inclinaison d'une paroi latérale, on entend que l'angle d'inclinaison est fonction d'une distance mesurée à partir du centre de la bande de roulement. La fonction utilisée est continue. Cette fonction peut être, par exemple, une fonction polynôme, exponentielle ou gaussienne.

Par « incision », on entend une découpure dont la distance entre les parois de matière est appropriée pour permettre la mise en contact au moins partielle des parois opposées délimitant ladite incision lors du passage dans le contact avec le sol. Cette distance pour une incision est ici au plus égale à 2 millimètres (mm).

Par « rainure », on entend une découpure dont la distance entre les parois de matière est telle que ces parois ne peuvent venir en contact l'une contre l'autre dans des conditions usuelles de roulage. Cette distance pour une rainure est supérieure à 2 millimètres (mm).

Par « direction radiale », on entend une direction qui est perpendiculaire à l'axe de rotation du pneu (cette direction correspond à la direction de l'épaisseur de la bande de roulement).

Par « direction axiale », on entend une direction parallèle à l'axe de rotation du pneu.

Par « direction circonférentielle », on entend une direction qui est tangente à tout cercle centré sur l'axe de rotation. Cette direction est perpendiculaire à la fois à la direction axiale et à la direction radiale.

### RESUME DE L'INVENTION

L'invention concerne un pneumatique en matériau caoutchoutique comprenant une bande de roulement de largeur W délimitée par au moins un bord (3). La bande de roulement comporte une pluralité de blocs, chaque bloc étant délimité par au moins une paroi latérale s'étendant principalement selon une direction axiale Y en direction du bord. La paroi latérale présente selon cette direction axiale une longueur L avec L supérieure à 35% de la largeur W de la bande de roulement. La paroi latérale présente un angle d'inclinaison par rapport à une direction radiale, ledit angle d'inclinaison évoluant le long de la direction axiale Y, cette évolution étant continue. L'évolution de l'angle d'inclinaison est conforme à une courbe de Gauss.

Il a été constaté qu'une évolution continue de l'angle d'inclinaison de la paroi latérale du bloc permet d'obtenir un profil d'usure sur le bloc plus régulier. En particulier, plus l'angle d'inclinaison de la paroi latérale est grand, plus importante est l'usure du bloc au niveau de cette paroi latérale. Ainsi, en pilotant la valeur de l'angle d'inclinaison tout en rendant cette variation d'inclinaison continue, il est possible d'orienter l'usure de la bande de roulement sur telle ou telle partie du bloc en vue de mieux répartir cette usure. On évite ainsi que des parties du pneumatique ne s'use prématurément et on améliore en conséquence le rendement kilométrique.

Avec une évolution conforme à une courbe de Gauss, l'angle d'inclinaison présente une valeur maximale à la moitié de la longueur L du bloc. Dans le cas où le bloc s'étend sur une demi-largeur de la bande de roulement, on favorise avec l'invention une usure dans une zone centrée sur la demi-bande de roulement. En favorisant une telle usure, on améliore le rendement kilométrique d'un pneumatique et ceci qu'il soit monté sur un essieu moteur ou sur un essieu directionnel.

Dans un autre mode de réalisation, la bande de roulement présentant un centre, le bloc s'étend du centre de ladite bande de roulement vers le bord selon une courbure C.

De cette manière, on favorise l'évacuation de l'eau en direction du bord de la bande de roulement. On améliore ainsi l'adhérence du pneumatique sur une chaussée humide.

Dans un autre mode de réalisation, chaque bloc est divisé en une pluralité de segments de blocs.

Dans un autre mode de réalisation, la paroi latérale délimite une rainure s'étendant vers le bord de la bande de roulement, la rainure présentant une section, la section de ladite rainure augmente en direction de ce bord.

En élargissant la section de la rainure, on améliore là aussi l'évacuation de l'eau hors de la bande de roulement.

Dans un autre mode de réalisation, les valeurs de l'angle d'inclinaison sont comprises entre -10° et 30°.

Avec un angle d'inclinaison proche de -10°, on s'assure d'une bonne adhérence sur une chaussée mouillée et/ou enneigée. Avec un angle d'inclinaison proche de 30°, on améliore l'adhérence sur une chaussée sèche. Ainsi, en prévoyant une plage de valeur d'angle d'inclinaison assez large, on peut adapter facilement les caractéristiques de la bande de roulement au type d'adhérence recherché.

Dans un mode de réalisation préférentiel, l'angle d'inclinaison pouvant prendre une valeur maximale et une valeur minimale, la différence entre cette valeur maximale et cette valeur minimale est d'au moins 10°.

Les inventeurs ont constaté qu'il faut au moins une différence de 10° entre la valeur maximale et la valeur minimale pour que l'effet sur l'usure de la bande de roulement soit appréciable.

La valeur maximale de l'angle d'inclinaison est de 15° et sa valeur minimale est de 5°.

Les inventeurs ont constaté qu'avec une telle caractéristique d'angle d'inclinaison, on limitait la rétention des cailloux dans la rainure délimitée par la paroi latérale.

Dans un mode de réalisation préférentiel, le bloc est délimité par une autre paroi latérale, cette autre paroi latérale présentant un angle d'inclinaison ayant une évolution continue.

Cela permet d'obtenir un profil d'usure régulier sur le bloc à la fois sur sa partie d'attaque et sur sa partie de fuite.

Dans un mode de réalisation préférentiel, la bande de roulement est directionnelle et le bloc comporte une arête d'attaque appartenant à la paroi latérale de ce bloc. Le bloc comporte également une arête de fuite appartenant à l'autre paroi latérale du bloc. La valeur de l'angle d'inclinaison maximale de la paroi latérale formant arête de fuite est supérieure à la valeur maximale de l'angle d'inclinaison de la paroi latérale formant arête d'attaque.

On optimise ainsi le fonctionnement de la bande de roulement en fonction de son sens de roulage. Lorsque le véhicule accélère, c'est l'arête d'attaque du bloc qui entre en contact en première avec le sol. Sur une chaussée humide, en accélération, on essaye alors de favoriser l'évacuation de l'eau hors de la bande de roulement. A l'inverse, lorsque le véhicule freine, c'est l'arête de fuite du bloc qui agit. En donnant à cette arête de fuite une plus grande valeur d'angle d'inclinaison, on favorise le freinage, notamment sur une chaussée sèche.

Dans un mode de réalisation préférentiel, le bloc comporte une partie chanfreinée au niveau de sa paroi latérale.

On favorise alors une adhérence transversale, notamment en virage, sur une chaussée enneigée et/ou mouillée.

Dans un mode de réalisation préférentiel, la paroi latérale du bloc comporte une ou plusieurs discontinuités.

Les discontinuités de la paroi latérale favorisent encore d'avantage l'adhérence transversale sur une chaussée enneigée et/ou mouillée.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue partielle d'une bande de roulement d'un pneumatique selon l'invention ;
- la **figure 2** représente une vue en coupe selon A-A' d'un bloc de la bande de roulement de la **figure 1** **;**
- la **figure 3** représente une vue schématique de l'évolution d'un angle d'inclinaison d'une paroi latérale du bloc de la **figure 2** **;**
- la **figure 4** représente une vue partielle d'une bande de roulement d'un pneumatique selon un second mode de réalisation de l'invention ;
- la **figure 5** représente une vue partielle d'une bande de roulement d'un pneumatique selon un troisième mode de réalisation de l'invention ;
- la **figure 6** représente une variante de réalisation selon un quatrième mode de réalisation de l'invention ;
- la **figure 7** représente une variante de réalisation selon un cinquième mode de réalisation de l'invention ;
- la **figure 8** représente une variante de réalisation selon un sixième mode de réalisation de l'invention.

Dans la description qui va suivre, des éléments sensiblement identiques ou similaires seront désignés par des références identiques.

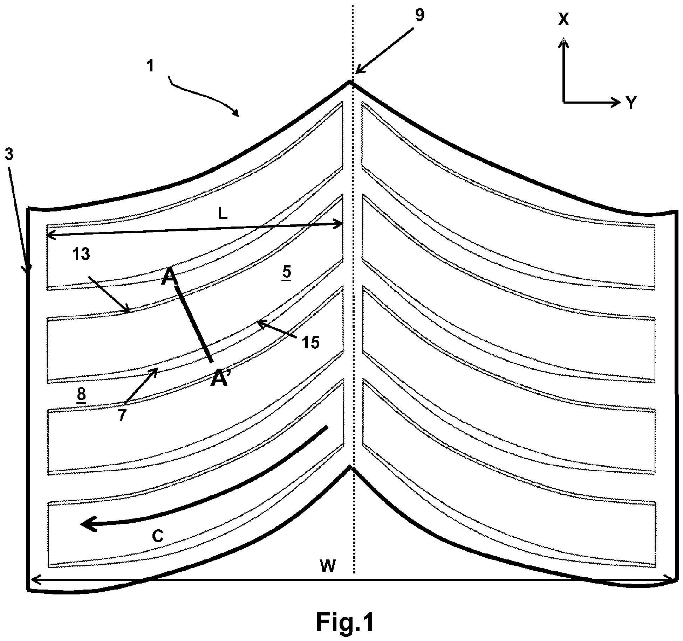

La **figure 1** présente schématiquement une vue partielle d'une bande de roulement 1 d'un pneumatique selon l'invention. La bande de roulement 1 est délimitée par deux bords 3 et un centre 9 séparant la bande de roulement en deux ½ bandes de roulement. Cette bande de roulement 1 présente une largeur W mesurée entre ces deux bords 3. On détermine que cette largeur W est égale à +/- 10% d'une largeur nominale Wnom. Cette largeur nominale Wnom est déterminée à l'aide de la formule suivante : Wnom= (1.075-0.005^{∗}ar)^{∗}S^{1.001} avec ar le rapport nominal d'aspect exprimé en base 100 et S la grosseur du boudin théorique sur la jante de mesure exprimée en mm. Ainsi, pour un pneumatique présentant la dimension 205/55 16, Wnom est égal à (1,075-0,005^{∗}55)^{∗}(205)^{1.001} = 165 mm.

La bande de roulement 1 comprend également une pluralité de blocs 5 de gomme en relief. Ces blocs de gomme 5 sont organisés dans la bande de roulement de sorte à former un dessin de sculpture particulier. Dans le mode de réalisation de la **figure 1****,** les blocs de gomme 5 s'étendent du centre 9 de la bande de roulement 1 vers un bord 3 respectif et ceci selon une courbure C. La sculpture formée est dite ici directionnelle. Ainsi chaque bloc de gomme 5 présente un bord d'attaque 13 et un bord de fuite 15. L'arête d'attaque 13 est la partie du bloc 5 qui va entrer en contact la première avec une chaussée lors d'une accélération du véhicule. L'arête de fuite 15 est la partie du bloc 5 qui va entrer en contact la première lors d'un freinage. En variante, l'organisation des blocs de gomme 5 pourrait être différente, par exemple, la sculpture formée par ces blocs 5 pourrait être non directionnelle.

Chaque bloc est délimité par au moins une paroi latérale 7. Cette paroi latérale 7 délimite une rainure 8 qui s'étend principalement selon une direction axiale Y en direction de la zone de bord 3. On notera que la paroi latérale 7 présente selon cette direction axiale Y une longueur L avec L supérieure à 35% de la largeur W de la bande de roulement. On notera également que dans un mode de réalisation préférentiel la section de la rainure 8 augmente en direction du bord 3. Dans l'exemple de la **figure 1** où la sculpture est directionnelle, la paroi latérale 11 délimite l'arête d'attaque 13 et la paroi latérale 7 opposée à la paroi latérale 11 dans le bloc 5 délimite l'arête de fuite.

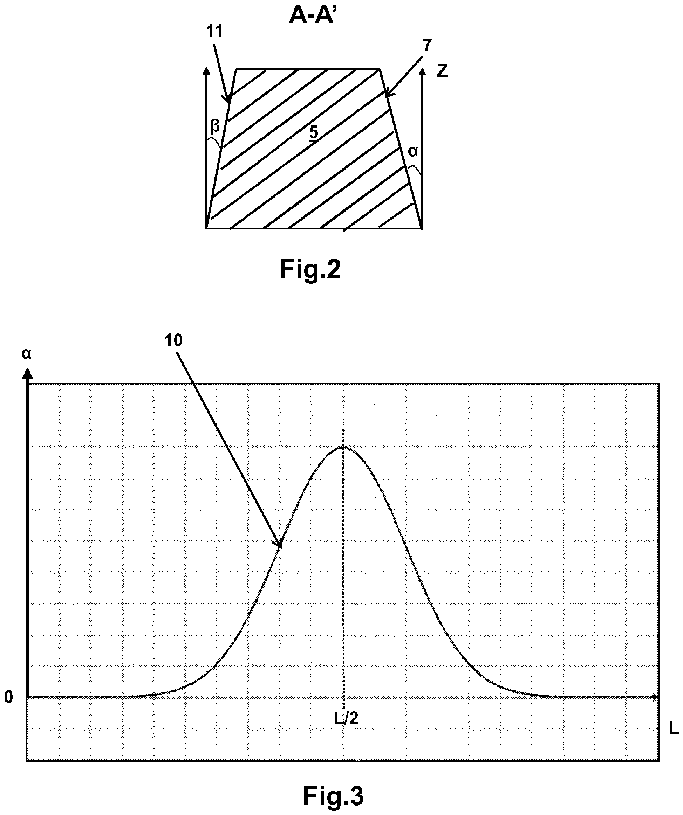

La **figure 2** présente une vue en coupe selon A-A' d'un bloc 5 de la bande de roulement 1. Plus particulièrement, la paroi latérale 11 du bloc 5 forme un angle d'inclinaison α par rapport à une direction radiale Z. Cet angle d'inclinaison α évolue selon la direction axiale Y de la **figure 1****,** cette évolution étant continue selon cette direction axiale. La paroi latérale 7, opposée à la paroi latérale 11, forme quant à elle un angle d'inclinaison β par rapport à la direction radiale Z. L'évolution de l'angle d'inclinaison pouvant être également elle aussi continue selon la direction axial Y. Les angles d'inclinaison α et β présentent des valeurs comprises entre -10° et 30°. On note que lorsque la valeur de l'angle est négative, la largeur de la rainure associée à la paroi latérale augmente dans la profondeur de cette rainure. Inversement, lorsque la valeur de l'angle est positive, la largeur de la rainure associée diminue dans la profondeur de la rainure.

Dans un mode de réalisation préférentiel, les évolutions des angles d'inclinaison α, β sont conformes à une courbe de Gauss 10, comme cela est représenté à la **figure 3****.** Sur cette **figure 3****,** on constate que les valeurs des angles d'inclinaison α et β sont maximales à L/2, c'est-à-dire à la moitié de la demi-bande de roulement.

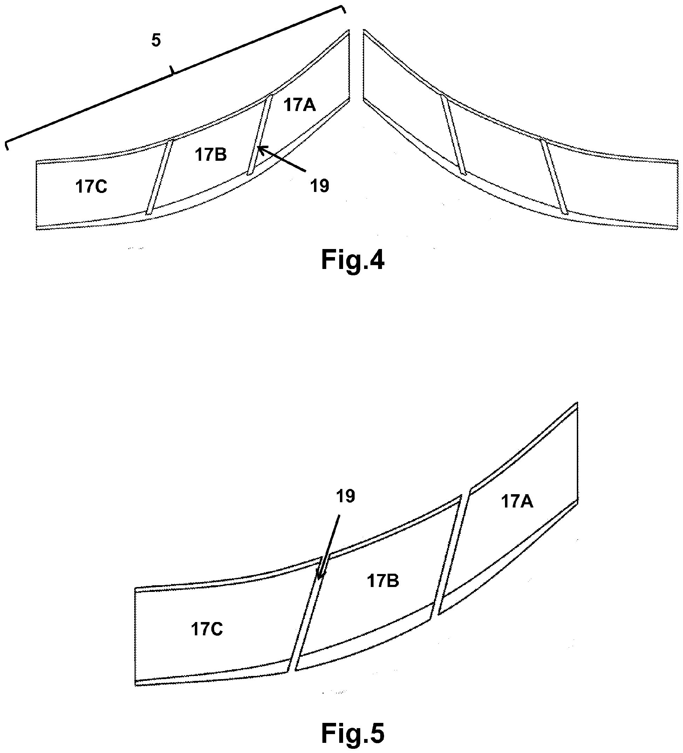

La **figure 4** présente un mode de réalisation alternatif dans lequel le bloc 5 est divisé en une pluralité de sous-blocs 17a, 17b, 17c séparés par des rainures secondaires 19. Ces rainures secondaires s'étendent principalement selon une direction circonférentielle X. Dans cet exemple, les rainures 19 ne s'étendant pas sur toute la profondeur de la bande de roulement, de sorte que les parois 7 et 11 s'étendent de manière continue du centre de la bande de roulement vers le bord.

Dans une variante de réalisation représentée à la **figure 5****,** les rainures 19 s'étendent sur toute la profondeur de la bande de roulement de sorte que les sous-blocs 17a, 17b, 17c sont bien séparés. Ainsi, les parois 7 et 11 ne s'étendent pas ici de manière continue du centre de la bande de roulement vers le bord car les rainures 19 créent des discontinuités. Cependant l'évolution des angles d'inclinaison de ces parois 7, 11 est continue car ces angles restent fonctions d'une distance mesurée à partir du centre de la bande de roulement.

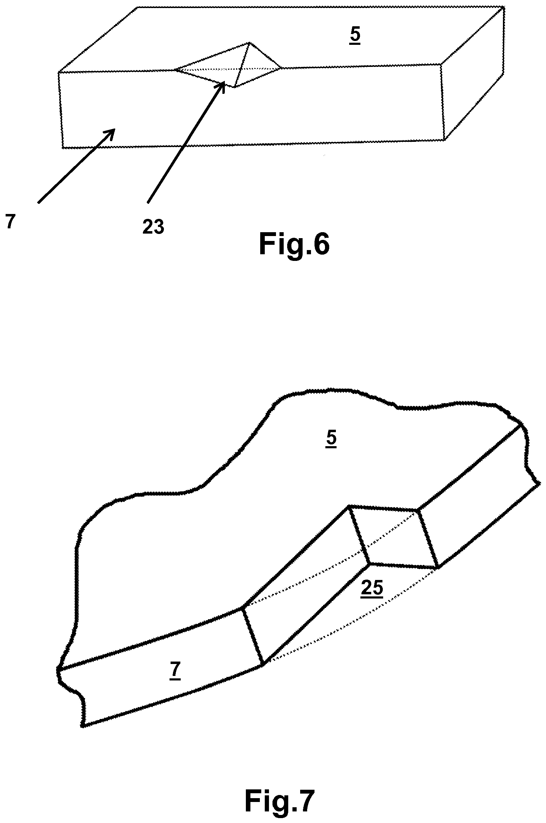

Dans un mode de réalisation alternatif, le bloc 5 comporte une partie chanfreinée 23 au niveau de sa paroi latérale, comme cela est visible à la **figure 6****.**

Dans un autre mode de réalisation visible à **la** **figure 7****,** la paroi latérale 7 du bloc 5 comporte une ou plusieurs discontinuités 25. De la même manière ici, l'évolution de l'angle d'inclinaison de la paroi 7 est continue car cet angle reste fonctions d'une distance mesurée à partir du centre de la bande de roulement

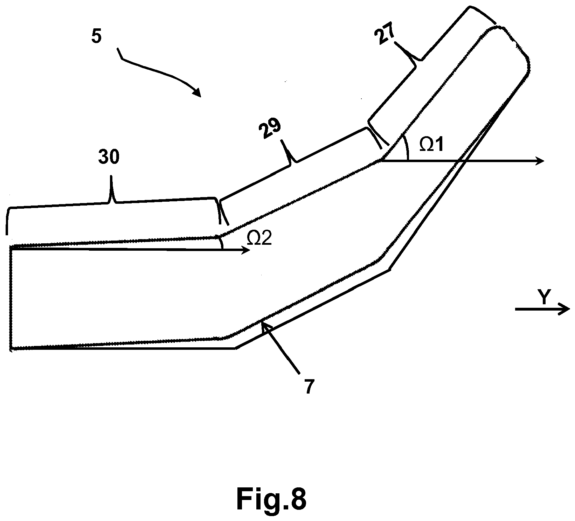

Dans un autre mode de réalisation visible à la **figure 8****,** chaque bloc 5 est divisé en une pluralité de segments de blocs 27, 29, 30. Plus particulièrement, le bloc 5 comprend un segment central 27 s'étendant globalement selon un angle Ω1, tel que 35°≤ Ω1 ≤65° avec une direction transversale Y. Le bloc 5 comprend également un segment de bord 30 s'étendant globalement selon un angle Ω2 tel que 0° ≤ Ω2 ≤ 10° avec la direction transversale Y. Le bloc 5 comprend enfin un segment de jonction 29 entre le segment central 27 et le segment de bord 30.

L'invention n'est pas limitée aux exemples décrits et représentés et diverses modifications peuvent y être apportées sans sortir de son cadre tel que défini par les revendications.

## Revendications

1. Pneumatique en matériau caoutchoutique comprenant une bande de roulement (1) de largeur W délimitée par au moins un bord (3), la bande de roulement comportant une pluralité de blocs (5), chaque bloc étant délimité par au moins une paroi latérale (7) s'étendant principalement selon une direction axiale Y en direction du bord (3), la paroi latérale (7) présentant selon cette direction axiale une longueur L avec L supérieure à 35% de la largeur W de la bande de roulement, la paroi latérale (7) présentant un angle d'inclinaison (α) par rapport à une direction radiale (Z), ledit angle d'inclinaison (α) évoluant le long de la direction axiale Y, cette évolution étant continue **caractérisé en ce que** l'évolution de l'angle d'inclinaison (α) est conforme à une fonction gaussienne (10).

2. Pneumatique selon la revendication 1, **caractérisé en ce que** la bande de roulement présentant un centre (9), le bloc (5) s'étend du centre (9) de ladite bande de roulement (1) vers le bord (3) selon une courbure C.

3. Pneumatique selon l'une des revendications 1 ou 2, **caractérisé en ce que** chaque bloc (5) est divisé en une pluralité de segments de bloc (27, 29, 30).

4. Pneumatique selon l'une des revendications 1 à 3, **caractérisé en ce que** la paroi latérale (7) délimite une rainure (8) s'étendant vers le bord (3) de la bande de roulement (1), la rainure 8 présentant une section, la section de ladite rainure augmente en direction de ce bord (3).

5. Pneumatique selon l'une des revendications 1 à 4, **caractérisé en ce que** les valeurs de l'angle d'inclinaison (a) sont comprises entre -10° et 30°.

6. Pneumatique selon l'une des revendications 1 à 5, **caractérisé en ce que** l'angle d'inclinaison (α) pouvant prendre une valeur maximale et une valeur minimale, la différence entre cette valeur maximale et cette valeur minimale est d'au moins 10°.

7. Pneumatique selon la revendication 6, **caractérisé en ce que** la valeur maximale de l'angle d'inclinaison est de 15° et sa valeur minimale est de 5°.

8. Pneumatique selon l'une des revendications 1 à 7, **caractérisé en ce que** le bloc (5) est délimité par une autre paroi latérale (11), cette autre paroi latérale (11) présentant un angle d'inclinaison (β) ayant une évolution continue.

9. Pneumatique selon la revendication 8, **caractérisé en ce que** la bande de roulement étant directionnelle, le bloc (5) comporte une arête d'attaque (13) appartenant à la paroi latérale (7) de ce bloc et le bloc (5) comporte une arête de fuite (15) appartenant à l'autre paroi latérale (11) du bloc, la valeur de l'angle d'inclinaison (a) maximale de la paroi latérale formant arête de fuite (15) est supérieure à la valeur maximale de l'angle d'inclinaison (β) de la paroi latérale formant arête d'attaque (13).

10. Pneumatique selon l'une quelconque des revendications 1 à 9, **caractérisé en ce que** le bloc (5) est divisé en une pluralité de sous-blocs (17a, 17b, 17c) séparés par des rainures secondaires (19) s'étendant principalement selon une direction circonférentielle X.

11. Pneumatique selon l'une quelconque des revendications 1 à 10, **caractérisé en ce que** le bloc (5) comporte une partie chanfreinée (23) au niveau de sa paroi latérale (7).

12. Pneumatique selon l'une quelconque des revendications 1 à 11, **caractérisé en ce que** la paroi latérale (7) du bloc (5) comporte une ou plusieurs discontinuités (25).

## Patentansprüche

1. Reifen aus Kautschukmaterial, welcher einen Laufstreifen (1) mit der Breite W umfasst, der von wenigstens einem Rand (3) begrenzt wird, wobei der Laufstreifen mehrere Blöcke (5) aufweist, wobei jeder Block von wenigstens einer Seitenwand (7) begrenzt wird, die sich hauptsächlich in einer axialen Richtung Y in Richtung des Randes (3) erstreckt, wobei die Seitenwand (7) in dieser axialen Richtung eine Länge L aufweist, wobei L größer als 35 % der Breite W des Laufstreifens ist, wobei die Seitenwand (7) einen Neigungswinkel (α) in Bezug auf eine radiale Richtung (Z) aufweist, wobei sich der Neigungswinkel (α) entlang der axialen Richtung Y ändert, wobei diese Änderung kontinuierlich ist, **dadurch gekennzeichnet, dass** die Änderung des Neigungswinkels (α) gemäß einer Gaußschen Funktion (10) erfolgt.

2. Reifen nach Anspruch 1, **dadurch gekennzeichnet, dass** der Laufstreifen eine Mitte (9) aufweist und der Block (5) sich von der Mitte (9) des Laufstreifens (1) zum Rand (3) hin entlang einer Krümmung C erstreckt.

3. Reifen nach einem der Ansprüche 1 oder 2, **dadurch gekennzeichnet, dass** jeder Block (5) in mehrere Blocksegmente (27, 29, 30) aufgeteilt ist.

4. Reifen nach einem der Ansprüche 1 bis 3, **dadurch gekennzeichnet, dass** die Seitenwand (7) eine Rille (8) begrenzt, die sich zum Rand (3) des Laufstreifens (1) hin erstreckt, wobei die Rille 8 einen Querschnitt aufweist, wobei sich der Querschnitt der Rille in Richtung dieses Randes (3) vergrößert.

5. Reifen nach einem der Ansprüche 1 bis 4, **dadurch gekennzeichnet, dass** die Werte des Neigungswinkels (α) zwischen -10° und 30° liegen.

6. Reifen nach einem der Ansprüche 1 bis 5, **dadurch gekennzeichnet, dass**, wenn der Neigungswinkel (α) einen maximalen Wert und einen minimalen Wert annehmen kann, die Differenz zwischen diesem maximalen Wert und diesem minimalen Wert mindestens 10° beträgt.

7. Reifen nach Anspruch 6, **dadurch gekennzeichnet, dass** der maximale Wert des Neigungswinkels 15° beträgt und sein minimaler Wert 5° beträgt.

8. Reifen nach einem der Ansprüche 1 bis 7, **dadurch gekennzeichnet, dass** der Block (5) von einer weiteren Seitenwand (11) begrenzt wird, wobei diese weitere Seitenwand (11) einen Neigungswinkel (β) aufweist, der eine kontinuierliche Entwicklung aufweist.

9. Reifen nach Anspruch 8, **dadurch gekennzeichnet, dass**, wenn der Laufstreifen laufrichtungsgebunden ist, der Block (5) eine Angriffskante (13) aufweist, die der Seitenwand (7) dieses Blocks angehört, und der Block (5) eine Hinterkante (15) aufweist, die der weiteren Seitenwand (11) des Blocks angehört, wobei der maximale Wert des Neigungswinkels (α) der Seitenwand, welche die Hinterkante (15) bildet, größer als der maximale Wert des Neigungswinkels (β) der Seitenwand ist, welche die Angriffskante (13) bildet.

10. Reifen nach einem der Ansprüche 1 bis 9, **dadurch gekennzeichnet, dass** der Block (5) in mehrere Teilblöcke (17a, 17b, 17c) aufgeteilt ist, die durch sekundäre Rillen (19) getrennt sind, welche sich hauptsächlich in einer Umfangsrichtung X erstrecken.

11. Reifen nach einem der Ansprüche 1 bis 10, **dadurch gekennzeichnet, dass** der Block (5) an seiner Seitenwand (7) einen abgeschrägten Teil (23) aufweist.

12. Reifen nach einem der Ansprüche 1 bis 11, **dadurch gekennzeichnet, dass** die Seitenwand (7) des Blocks (5) eine oder mehrere Unregelmäßigkeiten (25) aufweist.

## Claims

1. Tyre made of rubber material, comprising a tread (1) of width W that is delimited by at least one edge (3), the tread comprising a plurality of blocks (5), each block being delimited by at least one lateral wall (7) that extends mainly in an axial direction Y in the direction of the edge (3), the lateral wall (7) having a length L in this axial direction, where L is greater than 35% of the width W of the tread, the lateral wall (7) exhibiting an inclination angle (α) with respect to a radial direction (Z), said inclination angle (α) evolving in the axial direction Y, this evolution being continuous, **characterized in that** the evolution in the inclination angle (a) is in accordance with a Gaussian function (10).

2. Tyre according to Claim 1, **characterized in that**, the tread having a centre (9), the block (5) extends from the centre (9) of said tread (1) to the edge (3) along a curve C.

3. Tyre according to one of Claims 1 or 2, **characterized in that** each block (5) is divided into a plurality of block segments (27, 29, 30).

4. Tyre according to one of Claims 1 to 3, **characterized in that** the lateral wall (7) delimits a groove (8) that extends towards the edge (3) of the tread (1), the groove (8) having a cross section, the cross section of said groove increases in the direction of this edge (3).

5. Tyre according to one of Claims 1 to 4, **characterized in that** the values of the inclination angle (a) are between -10° and 30°.

6. Tyre according to one of Claims 1 to 5, **characterized in that**, the inclination angle (α) being able to have a maximum value and a minimum value, the difference between this maximum value and this minimum value is at least 10°.

7. Tyre according to Claim 6, **characterized in that** the maximum value of the inclination angle is 15° and its minimum value is 5°.

8. Tyre according to one of Claims 1 to 7, **characterized in that** the block (5) is delimited by another lateral wall (11), this other lateral wall (11) exhibiting an inclination angle (β) that evolves continuously.

9. Tyre according to Claim 8, **characterized in that**, the tread being directional, the block (5) has a leading edge (13) belonging to the lateral wall (7) of this block and the block (5) has a trailing edge (15) belonging to the other lateral wall (11) of the block, the maximum value of the inclination angle (a) of the lateral wall that forms the trailing edge (15) being greater than the maximum value of the inclination angle (β) of the lateral wall that forms the leading edge (13).

10. Tyre according to any one of Claims 1 to 9, **characterized in that** the block (5) is divided into a plurality of sub-blocks (17a, 17b, 17c) separated by secondary grooves (19) that extend mainly in a circumferential direction X.

11. Tyre according to any one of Claims 1 to 10, **characterized in that** the block (5) has a chamfered part (23) at its lateral wall (7).

12. Tyre according to any one of Claims 1 to 11, **characterized in that** the lateral wall (7) of the block (5) has one or more discontinuities (25).
